# EUROPÄISCHE PATENTSCHRIFT

(11) **EP 1 025 899 B1**
(45) Veröffentlichungstag und Bekanntmachung des Hinweises auf die Patenterteilung: **12.11.2003**
(21) Anmeldenummer: 00102010.6
(22) Anmeldetag: 02.02.2000
(51) Int. Cl.: B01J 2/16, B01J 8/18, B01J 8/44

(54) **Vorrichtung zum Behandeln von partikelförmigem Gut**
Particulate material processing apparatus
Dispositif pour le traitement de matière particulaire

(30) Priorität: 03.02.1999 DE 19904147
(43) Veröffentlichungstag der Anmeldung: 09.08.2000
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Weller, Wolfgang, Dr.

(56) Entgegenhaltungen:
- EP-A- 0 370 167
- DD-B- 203 826
- DE-A- 3 107 357
- DE-A- 4 217 110
- US-A- 4 115 929

## Beschreibung

Die Erfindung betrifft eine Vorrichtung zum Behandeln von partikelförmigem Gut, mit einer Prozeßkammer zum Aufnehmen und zum Behandeln des Gutes, wobei ein Boden der Prozeßkammer aus einander überlappenden Leitplatten aufgebaut ist, zwischen denen Schlitze gebildet sind, über die die Prozeßluft mit einer im wesentlichen horizontalen Bewegungskomponente in die Prozeßkammer einführbar ist.

Eine derartige Vorrichtung ist aus der DD 203 826 B bekannt.

Derartige Vorrichtungen dienen dazu, um ein partikelförmiges Gut zu trocknen, zu granulieren oder zu coaten.

Ein gasförmiges Medium, sogenannte Prozeßluft, wird über den Boden in die Prozeßkammer eingeführt und tritt dabei durch die zahlreichen Schlitze zwischen den sich überlappenden Leitplatten etwa horizontal gerichtet in die Prozeßkammer ein.

Bei einer ähnlichen, aus der EP 0 370 826 A1 bekannten Vorrichtung besteht der Boden aus einem Kranz sich radial erstreckender und einander überlappender Leitplatten, wobei sich die Schlitze in radialer Richtung erstrecken. Das auf dem Boden liegende zu behandelnde Gut wird durch die Prozeßluft zu einem toroidal rotierenden Materialband verwirbelt. Der Boden ist ringförmig ausgebildet, d.h. mittig ist ein Verdrängungskörper enthalten. Durch die zunächst horizontal gerichtete Komponente der Prozeßluft schwebt das rotierende Materialband auf einer Art Prozeßluftpolster. Im Boden, zwischen den Leitplatten, können Düsen angeordnet sein, um dem zu behandelnden partikelförmigen Gut ein Behandlungsmedium aufzusprühen.

Bei dieser Technologie herrscht der Grundsatz, daß die Prozeßluft zunächst mit einer im wesentlichen horizontalen Komponente in die Prozeßkammer eingeführt wird.

Bei einer aus der EP 0 436 787 B1 bekannten weiteren Vorrichtung zum Behandeln von partikelförmigem Gut ist die Prozeßluftführung derart gestaltet, daß dieser schon beim Eintritt in die Prozeßkammer eine im wesentlichen von unten nach oben, also eine im wesentlichen vertikale Strömungsrichtung verliehen wird. In der Prozeßkammer sind sich längs erstreckende hohle Lanzen, die sich im allgemeinen quer zum Gasstrom erstrecken, vorgesehen, die nach oben sprühende Düsen aufweisen, somit Prozeßluft und Düsensprührichtung in einer im wesentlichen vertikalen, von unten nach oben gerichteten Bewegung verlaufen. Eine derartige Vorrichtung dient insbesondere dazu, relativ großkörniges Gut, bspw. Pellets aus dem pharmazeutischen Bereich, mit einem Überzug zu versehen.

Das Spektrum an zu behandelndem partikelförmigem Gut ist bei der eingangs genannten Vorrichtung entsprechend der EP 0 370 167 A1 wesentlich breiter als das mit der zuletzt genannten Vorrichtung zu behandelnde Gutspektrum.

Insbesondere im Anwendungsgebiet der Chemie und der pharmazeutischen Technologie sind die nachfolgenden wesentlichen Kriterien dieser Vorrichtungen zu beachten.

Es sollen berührungsfreundliche, gut zu reinigende Oberflächen vorhanden sein, um den Anforderungen an die Hygiene genüge zu tun.

Die in der Prozeßkammer ablaufenden Prozesse sollen reproduzierbar sein, d.h. Zufälligkeiten in der Funktion sind durch entsprechende Maßnahmen auszuschließen.

Ein ganz wesentliches Kriterium ist das sogenannte "Scaling-up", d.h. die lineare Vergrößerbarkeit des Maßstabes unter Beibehaltung der spezifischen Prozeßfunktionen, wie z.B. eine kontinuierliche Umwälzung und Bewegung des Produktes nach exakt vorgegebenem Muster. Zurückkehrend zu dem in der eingangs genannten Vorrichtung erzeugten rotierenden toroidalen Band bedeutet dies, daß bei einem Scaling-up ein lediglich durchmessergrößeres rotierendes Band erzeugt werden soll, in dem selbst aber, pro Volumeneinheit, gleiche Strömungs-, Partikel- und Bewegungsverhältnisse vorherrschen sollen.

Weitere Kriterien sind eine bestmögliche Funktion der Vorrichtung durch formale Gestaltung der Komponenten mit den Besonderheiten der zu behandelnden Produkte in Zusammenhang mit den zu berücksichtigenden aerodynamischen und thermodynamischen Aspekten. Darüber hinaus soll ein optimales Design durch entsprechende Gestaltung vorhanden sein, und zwar sowohl im gesamten als auch im Detail, um eine berührungsfreundliche Handhabung sicherzustellen, bei dem die Form Funktion und die Funktion Form hat.

Bei der eingangs genannten Vorrichtung kann durch das horizontale Einströmen der Prozeßluft das auf dem Boden liegende Gut zunächst von diesem abgehoben und zu einer Art Luftgleitbett aufgeweitet werden.

Die Prozeßluft muß aber irgendwann einmal aus dem rotierenden toroidalen Band austreten, wobei dies idealerweise so erfolgen sollte, daß keine Aufbrüche oder vulkanartige Gasaustritte aus dem toroidalen Band stattfinden. Letztendlich existieren aber keine definierten Aufbruchstellen des bewegten Gutes bzw. keine definierten Austrittsstellen der Prozeßluft aus dem Produkt heraus. Um dennoch eine möglichst gleichmäßige Trocknung des partikelförmigen Gutes zu erreichen, insbesondere wenn eine aus Düsen versprühte Flüssigkeit möglichst gleichmäßig auf das im toroidalen Band verwirbelte Gut aufgetragen werden soll, müssen diese Düsen statistisch so verteilt werden, daß auch alle möglichen statistisch verteilt auftretenden Aufbruchstellen im statistischen Mittel gleichmäßig bedeckt werden.

Ein weiteres erhebliches Problem mit der Konstruktion der radialen Schlitze besteht beim Scaling-up. In der Draufsicht sind die einzelnen sich überlappenden Leitplatten etwa trapezförmig. Wird nun der Durchmesser des Bodens beim Scaling-up stark vergrößert, ist der umfängliche Abstand zwischen zwei in Strömungsrichtung aufeinanderfolgenden Schlitzen im radial inneren wesentlich geringer als im radial äußeren Bereich. Anders ausgedrückt wird ein radial innen umlaufendes Gutteilchen nach einer wesentlich kürzeren Laufstrecke wieder von der durch den nächst nachfolgenden Schlitz austretenden Prozeßluft beschleunigt und verwirbelt als ein radial außen umlaufendes Gutteilchen. Um gleichmäßigere Verhältnisse zu schaffen, muß also einem radial weiter außen umlaufenden Gutteilchen eine höhere Umfangsgeschwindigkeit verliehen werden, damit es zum gleichen Zeitpunkt wie ein radial inneres Teilchen wieder von neuer Prozeßluft umfaßt, beschleunigt und verwirbelt wird. Dies wird dadurch bewerkstelligt, daß die Höhe der Luftaustrittsschlitze radial nach außen zunimmt, also die Austrittsöffnungsquerschnitte größer werden, so daß radial außen mehr Prozeßluft austreten kann. Dies führt aber zwangsläufig dazu, daß die Leitplatten radial nach außen etwas ansteigen und die äußerste Kante somit dem rotierenden schwebenden Band ein mechanisches Hindernis darstellen. Es ist aber erstrebt, daß das rotierende Materialband berührungslos auf einem Luftpolster schwebt. Um einen geschlossenen Kranz bilden zu können, sind die einzelnen Leitplatten schräg angestellt. Die Schrägstellung und die Anordnung der Leitplatten als Kranz, bei dem eine Leitplatte immer eine nachfolgende überlappt, führen zu einem Gebilde, das im Bereich der Schlitze relativ große Öffnungen aufweist, durch die das Gut hindurchfallen kann, was unerwünscht ist.

Im Hinblick auf die zuvor erwähnten Kriterien und die Nachteile der eingangs genannten Vorrichtung bezüglich der nicht definiert vorhandenen Aufbruchstellen und der Schwierigkeiten beim Scaling-up ist es Aufgabe der vorliegenden Erfindung, diese Nachteile zu überwinden und eine Vorrichtung zu schaffen, mit der ein breites Spektrum an partikelförmigem Gut optimal behandelt werden kann.

Erfindungsgemäß wird die Aufgabe durch eine Vorrichtung gemaß Anspruch 1 gelöst.

Dadurch, daß die Prozeßluft mit einer etwa horizontal gerichteten Bewegungskomponente in den Boden eingeführt wird, kann zunächst ein Luftpolster aufgebaut werden, auf dem das in der Prozeßkammer verwirbelte Gut ruht. Durch Vorsehen zweier entgegengesetzter, aufeinander zu gerichteter etwa horizontaler Strömungen entsteht eine Zone, in der diese Strömungen aufeinandertreffen und zwangsweise vertikal nach oben umgelenkt werden. Nach unten ist ein Ausweichen nicht möglich, da dort die Leitplatten des Bodens ein Ausweichen verhindern. Daher entsteht eine ganz definierte Aufbruchzone für das zu behandelnde Gut, in der die Prozeßluft vertikal nach oben ansteigt bzw. ausbricht und somit aus dem Gut austritt. Die nach oben in der Aufbruchzone definiert aufsteigende Prozeßluft reißt ein Teil des auf dieser schwebenden Gutes mit, dieses trennt sich aber nach einer relativ kurzen Wegstrecke von der nach oben ausbrechenden Prozeßluft und fällt auf das über dem Boden schwebende Gutpolster zurück, wird dort wieder von den gegenläufigen horizontal gerichteten Strömungen erfaßt und somit in einem Kreislauf geführt. Im Bereich des Bodens bis zur Aufbruchstelle steht das Gut unter ganz definierten gleichmäßigen Behandlungsbedingungen, die unter anderem abhängig von der Menge und der Geschwindigkeit der eingeführten Prozeßluft und dem Abstand zwischen zwei aufeinanderfolgenden Schlitzen sind. Erst in der Aufbruchzone ändern sich diese Verhältnisse abrupt, und die Prozeßluft bricht durch die etwa rechtwinklige Umlenkung definiert nach oben aus.

Es ist also eine relativ lange definierte, im wesentlichen horizontal verlaufende Wegstrecke vorhanden, in der die einzelnen Partikel unter gut steuerbaren und gut handhabbaren Bedingungen mit der Prozeßluft behandelt werden.

Soll bspw. lediglich ein Trocknungsvorgang stattfinden, kann in dieser horizontalen Wegstrecke die entsprechende Wärmeenergie auf das mit der warmen Prozeßluft behandelte Gut überbracht und entsprechend getrocknet werden. In der Aufbruchzone wird dann die Prozeßluft abrupt nach oben umgelenkt, nimmt dabei das Gut mit, trennt sich nach gewisser Strecke von dem Gut und das Gut kann dann wieder in Richtung Boden zurückfallen und erneut über eine definierte Wegstrecke einem Trocknungsvorgang unterworfen werden.

Soll das Gut bspw. granuliert oder gecoatet werden, kann dann definiert in der Aufbruchzone ein entsprechendes Medium dem Gut zugeführt werden, in der horizontal gleichmäßig und definiert ablaufenden Laufstrecke finden dann die entsprechenden Trocknungsprozesse statt.

Mit dieser Ausgestaltung ist nunmehr aber auch ein problemloses "Scaling-up" deswegen zuzuführen, da eine lineare Vergrößerung des Bodens keinerlei Änderung der Strömungsverhältnisse im horizontalen Bereich hervorruft, es wird dementsprechend bloß eine größere Anzahl an Leitplatten und Schlitzen hintereinander angeordnet. Nach wie vor existiert eine definierte Aufbruchzone, nämlich die Zone, in der die entgegengerichteten Ströme aufeinandertreffen. Somit ändern sich weder strömungstechnische noch prinzipielle bauliche Bedingungen beim Scaling-up, wie das bspw. bei der eingangs genannten Vorrichtung notwendig war, bei der beim Scaling-up die Leitplatten radial außen weiter ansteigen mußten und somit mechanische Hindernisse darstellen.

Die Höhe der Schlitze bzw. der Luftspalte ist immer gleich, so daß nicht die Gefahr besteht, daß beim Scaling-up große Öffnungen entstehen, durch die das Gut nach unten durch den Boden austreten kann. Ferner können die Leitplatten horizontal angeordnet werden und müssen nicht wie bei der Kranzanordnung schräggestellt werden, was ein Abrutschen des ruhenden Produktes in Richtung der Luftspalte fördert.

Somit wird die Aufgabe vollkommen gelöst.

In einer weiteren Ausgestaltung der Erfindung ist in der Aufbruchzone zumindest eine etwa vertikal nach oben gerichtete Düse angeordnet.

Diese Maßnahme hat den Vorteil, daß die Aufbruchzone, in der die im wesentlichen horizontalen gegenläufigen Strömungen aufeinanderprallen und vertikal nach oben abgelenkt werden, zum Einführen von Flüssigkeiten herangezogen wird, mit denen das Gut behandelt werden soll. Die vertikal nach oben gerichtete Strömung in der Aufbruchzone, resultierend aus den beiden aufeinanderprallenden, etwa horizontalen Strömungen, hat eine einem Sprühkegel sehr ähnliche, sich trompetenartig aufweitende Bewegungscharakteristik, eine Charakteristik, die ideal ist, um ein Gut mit einem Sprühkegel zu behandeln. Im Gegensatz zu der eingangs genannten Vorrichtung, bei der die Düsen statistisch im Boden verteilt werden, kann nun an einer ganz gewissen definierten Stelle, nämlich in der Aufbruchzone, eine Flüssigkeit aufgebracht werden, was einen erheblicher prozeß- und steuerungstechnischer Vorteil darstellt.

In einer weiteren Ausgestaltung der Erfindung sind im Bereich der Aufbruchzone Leitflächen angeordnet, die den Übergang von den horizontalen Strömungen in die vertikal nach oben gerichteten Strömungen leiten.

Diese Maßnahme hat den Vorteil, daß bei gegen Aufprallen empfindlichem Gut die Richtungsänderung von der im wesentlichen horizontalen Richtung in die vertikal nach oben ansteigende Richtung mechanisch sanft unterstützt wird. Ein derartiges empfindliches Gut sind bspw. relativ große Pellets, wie sie in der pharmazeutischen Industrie Verwendung finden, die durch vorheriges Granulieren oder Komprimieren erhalten wurden und die relativ scharfe Kanten und Ecken aufweisen. Obwohl nur die Prozeßluftströmungen in der Aufbruchzone direkt aufeinandertreffen und nicht die Gutpartikel, kann nicht ausgeschlossen werden, daß einzelne Partikel aufeinanderstoßen. Würden solche Teile diametral entgegengesetzt aufeinanderprallen, könnten Ausbrüche stattfinden. Bei relativ kleinem und unempfindlichem Gut sind solche Ausbrüche nicht zu befürchten, so daß dann keine solchen Leitplatten vorgesehen sein müssen, diese aber dennoch, die Bewegungsumlenkung unterstützend, vorhanden sein können.

In einer weiteren Ausgestaltung der Erfindung sind im Bereich des Umfangs des Bodens ebenfalls Schlitze angeordnet, über die Prozeßluft entsprechend der gegenläufigen Strömung einführbar sind.

Diese Maßnahme hat nun den erheblichen Vorteil, daß sich in dem umfänglichen Eckbereich zwischen dem sich horizontal erstrekkenden Boden und der stehenden Behälterwand keine Ablagerungen stattfinden können. Es wurde beobachtet, daß bei manchem Gut die Neigung dazu besteht, sich nach und nach in diesen Ecken abzusetzen und sich dadurch dem weiteren Behandlungsprozeß zu entziehen. Dadurch, daß nun in diesem kritischen Bereich ebenfalls Schlitze vorhanden sind, über die die Prozeßluft in die Prozeßkammer eintritt, werden diese kritischen Eckpunkten quasi dauernd freigeblasen.

In einer weiteren Ausgestaltung erstreckt sich die Aufbruchzone etwa mittig quer über den Boden.

Diese Maßnahme hat den Vorteil, daß der Boden etwa spiegelsymmetrisch in zwei identischen Hälften unterteilt ist, so daß das Gut, wenn es dann mittig auf die Aufbruchzone trifft, beidseits dieser Zone gleichartige und über eine gleiche Strecke durchgeführte Behandlungen erfahren hat.

In einer weiteren Ausgestaltung erstrecken sich bei einem kreisförmigen Boden die Schlitze längs Sekanten, und die Aufbruchzone erstreckt sich längs eines Durchmessers.

Bei dieser Boden- bzw. Prozeßkammergestaltung nimmt die Länge der Sekanten radial von außen nach innen gesehen immer mehr zu, d.h. einer ganz bestimmten Gutmenge kann in Richtung Aufbruchzone gesehen immer mehr Platz und mehr Prozeßluft zugeführt werden. Das heißt, das Gut kann sich quasi entspannen oder befreiend ausatmen, dabei können sich die Partikel, da ihnen ein immer größerer Raum zur Verfügung steht, permanent voneinander weg bewegt werden und somit optimal mit Prozeßluft behandelt werden, ohne daß sich die Partikel gegenseitig behindern oder beeinflussen. Erst in der Aufbruchzone treffen sie aufeinander und werden dann vertikal nach oben umgelenkt.

Es sind auch andere Geometrien als kreisförmige Geometrien möglich, bspw. quadratische oder rechteckige. Läuft die Aufbruchzone diagonal durch ein Quadrat, sind also die beiden gegenläufigen Bereiche in Dreiecke aufgeteilt, von deren Spitze her sich das Gut auf die Aufbruchzone zu bewegt.

Es ist aber auch möglich, einen rechteckförmigen Boden zu schaffen, und die Schlitze parallel zu den kurzen Rechteckseiten anzuordnen, so daß dann, je nach Länge der langen Rechteckseite ausreichend horizontal gerichtete Behandlungsstrecken zur Verfügung stehen, bis die gegenläufigen Ströme mittig in der Aufbruchzone aufeinandertreffen.

Somit ist also systemimmanent die Möglichkeit geschaffen, eine Vielzahl von Bodengeometrien einzusetzen, um für das jeweils zu behandelnde Gut optimale Bedingungen zu schaffen.

In einer weiteren Ausgestaltung der Erfindung sind unter dem Boden zwei Anströmkammern angeordnet, die mit Prozeßluft beschickbar sind.

Diese Maßnahme hat den Vorteil, daß über die zwei Anströmkammern die jeweils gegenläufige Strömungskomponente beidseits der Aufbruchzone definiert aufgebaut werden kann, oder anders ausgedrückt, die beidseits der Aufbruchzone angeordneten Schlitze über die zwei Anströmkammern jeweils mit Prozeßluft zu versorgen.

In einer weiteren Ausgestaltung der Erfindung verjüngen sich die beiden Anströmkammern zur Aufbruchzone hin in vertikaler Richtung zu einem Schlitz, der unmittelbar an der Aufbruchzone mündet.

Diese Maßnahme hat den Vorteil, daß die Anströmkammern den mittigen Bereich unmittelbar unter der Aufbruchzone nicht baulich beanspruchen, so daß in diesem Bereich unter dem Boden ausreichend Raum zur Verfügung steht, um andere Bauelemente, bspw. Düsen anzuordnen. Die entfernt von der mittigen Aufbruchzone liegenden Schlitze werden jeweils durch die entsprechende Anströmkammer gastechnisch versorgt. Die Mündungen der beiden Anströmkammern unmittelbar vor der Aufbruchzone ergeben die Möglichkeit, dort genau definiert aufeinanderprallende Gasströme zu schaffen, die mittig einen vertikal nach oben gerichteten Kernstrom ausbilden. Dadurch kann ein schonendes Luftpolster im Aufbruchsbereich zwischen den aufeinanderprallenden Strömungen geschaffen werden.

In einer weiteren Ausgestaltung der Erfindung ist die zumindest eine Düse zwischen den geteilten Anströmkammern und von diesen baulich getrennt angeordnet.

Diese Maßnahme hat den Vorteil, daß Anströmkammern und Düsen voneinander getrennte Baueinheiten sind, die dann entsprechend unabhängig voneinander gehandhabt z.B. gereinigt werden können. Dies eröffnet auch die Möglichkeit, im laufenden Betrieb eine Düse, die möglicherweise verklebt oder verstopft ist, kurzzeitig abzuziehen und zu reinigen und dann wieder einzuschieben, ohne den Prozeß unterbrechen zu müssen. Dies deswegen, da die beiden aufeinanderprallenden Gasströme ein durchgehendes dichtes Gasschild bilden, die kein Eindringen von Kontaminationen in die Prozeßkammer für diesen kurzen Zeitraum zu Inspektionszwecken erlauben.

In einer weiteren Ausgestaltung ist die zumindest eine Düse nach unten vom Boden abnehmbar.

Diese Maßnahme hat den Vorteil, daß z.B. die zuvor erwähnte Inspektion, auch während des Betriebes, einfach durchzuführen ist, indem lediglich eine solche Düse von unten vom Boden abgezogen oder von diesem nach unten abgeschwenkt wird.

In einer weiteren Ausgestaltung der Erfindung sind, in Strömungsrichtung jedes des aus den Schlitzen austretenden gegenläufigen Teilstromes gesehen, in den Leitplatten etwa in deren zweiter Hälfte vor dem nächsten Schlitz Perforationen vorgesehen.

Diese Maßnahme hat den Vorteil, insbesondere bei relativ schwerem und grobpartikelförmigem Gut, daß diesem eine gewisse vertikale Komponente während der zweiten Hälfte seiner Wegstrecke zwischen zwei Schlitzen verliehen wird, um ein Absinken aufgrund der Schwerkraft auszugleichen, so daß auch bei solchem kritischen Gut dieses zwischen zwei aufeinanderfolgenden Schlitzen permanent auf einem Luftpolster über der Leitplatte gleitet.

In einer weiteren Ausgestaltung der Erfindung sind die Abstände zwischen den Schlitzen in Strömungsrichtung gesehen etwa gleich.

Diese Maßnahme hat den Vorteil, daß durch diese gleichen Abstände ganz bestimmte definierte Behandlungsbedingungen in den etwa horizontal verlaufenden Teilströmen geschaffen werden, die auch beim Scaling-up, also einer Hintereinanderreihung einer Vielzahl solcher gleichmäßig voneinander beabstandeter Schlitze, aufrechterhalten bleibt.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele der Erfindung in Zusammenhang mit den beiliegenden Zeichnungen näher beschrieben und erläutert. Es zeigen:
- Fig. 1: einen Querschnitt einer Vorrichtung über deren Boden mit Blickrichtung auf den Boden,
- Fig. 2: einen Schnitt längs der Linie II-II in Fig. 1,
- Fig. 3: eine vergrößerte Darstellung des in Fig. 2 mit einem Kreis umrandeten Bereiches,
- Fig. 4: eine ausschnittsweise Seitenansicht von links auf die Darstellung von Fig. 1,
- Fig. 5: einen Schnitt längs der Linie V-V in Fig. 1, wobei zusätzlich die Baugruppe der Düsen in nach unten weggeschwenktem Zustand dargestellt ist,
- Fig. 6: eine stark vergrößerte Darstellung des in Fig. 5 mit einem Kreis umrandeten Bereiches, und
- Fig. 7: eine der Fig. 1 vergleichbare vereinfachte Draufsicht auf einen Boden einer kleineren Vorrichtung mit teilweise perforierten Leitplatten.

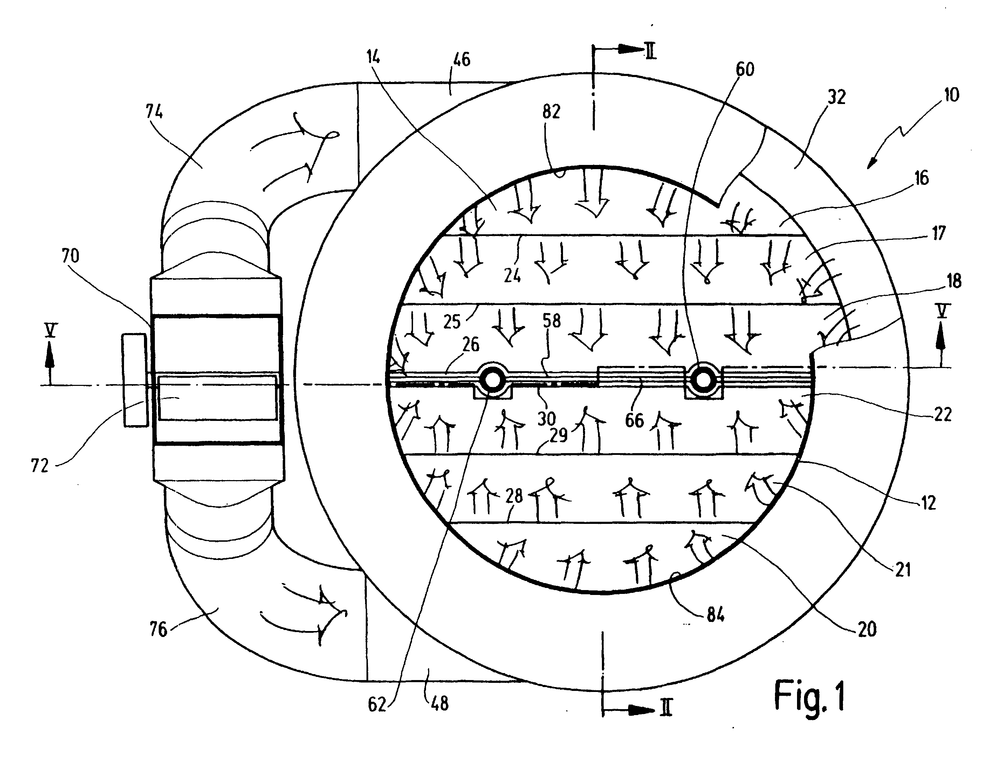

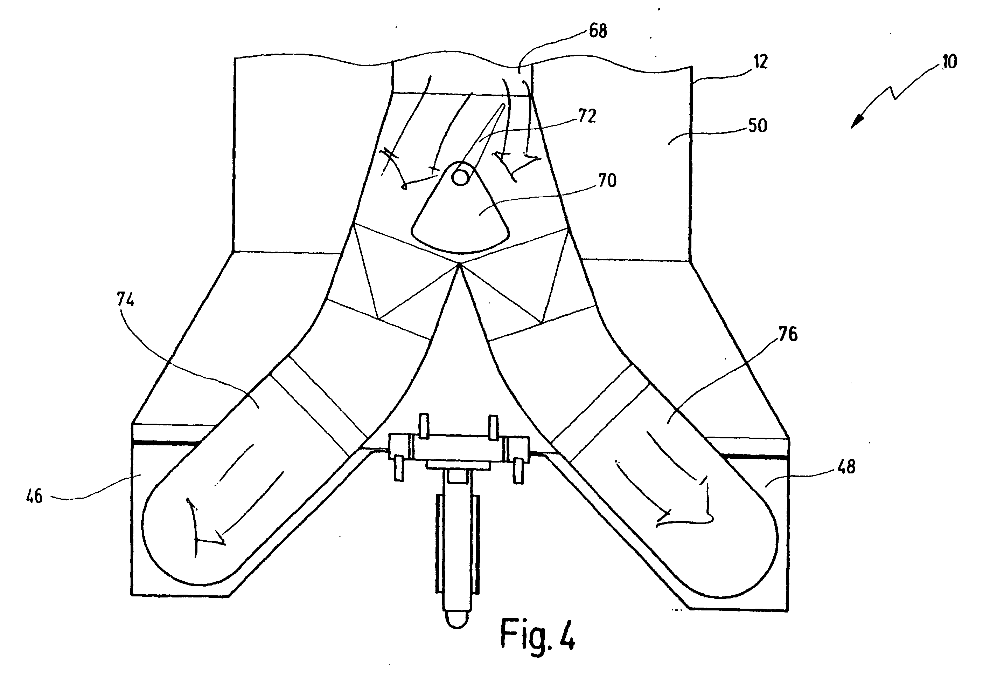

Eine in den Fig. 1 bis 6 gezeigte Vorrichtung ist in ihrer Gesamtheit mit der Bezugsziffer 10 bezeichnet.

Die Vorrichtung 10 weist einen stehenden zylindrischen Behälter 12 auf, der mit einem Boden 14 versehen ist.

Der Deckelbereich des Behälters 12 ist nicht dargestellt, da diese Ausgestaltung in an sich bekannter Weise wie bei diesem Vorrichtungen üblich ausgestaltet sein kann.

Der Boden 14 ist aus einem ersten Satz an sich einander überlappenden Leitplatten 16, 17, 18 aufgebaut.

Die Leitplatte 16 ist die am höchsten gelegene, sie überlappt die unter ihr gelegene Leitplatte 17 und diese wiederum die etwas unter ihr gelegene Leitplatte 18.

Die Geometrie der Leitplatten 16, 17 und 18 ist derart, daß dieser Zusammenbau etwa eine halbscheibenförmige Gestalt aufweist.

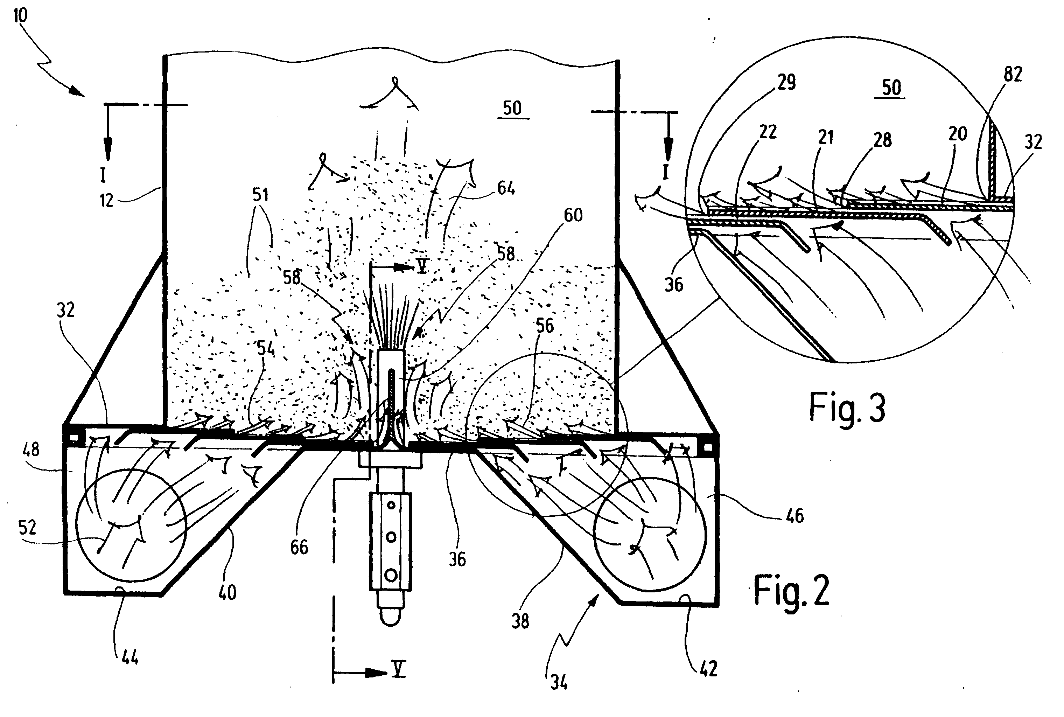

Spiegelbildlich dazu ist ein weiterer Satz an Leitplatten 20, 21, 22 vorgesehen. Die Leitplatte 20 überlappt die unter ihr liegende Leitplatte 21, diese wiederum die unter ihr liegende Leitplatte 22, wie das insbesondere aus der Schnittdarstellung von Fig. 2 und der vergrößerten Darstellung von Fig. 3 ersichtlich ist.

Durch diese überlappte Anordnung ist zwischen der Leitplatte 16 und 17 ein Schlitz 24, zwischen der Leitplatte 17 und 18 ein Schlitz 25 vorhanden.

Dementsprechend ist zwischen der Leitplatte 20 und 21 ein Schlitz 28 und zwischen der Leitplatte 21 und dem Schlitz 22 ein Schlitz 29 vorgesehen.

Unterhalb der Leitplatten ist ein Unterboden 34 vorgesehen, der ein durchgehendes Mittelstück 36 aufweist, das unter den Platten 18 bzw. 22 liegt, so daß zwischen diesem Mittelstück 36 und der Platte 18 ein weiterer Schlitz 26 bzw. zwischen dem Mittelstück 36 und der Platte 22 ein Schlitz 30 geschaffen ist.

Die Schlitze 36 und 30 münden auf gleicher Höhe und stehen sich diametral gegenüber.

Sämtliche Schlitze 24 bis 26 und 28 bis 30 verlaufen geradlinig, also längs Sekanten des Umfangskreises des kreisförmigen Bodens 14 und weisen dieselbe Höhe auf.

Wie insbesondere aus der Schnittdarstellung von Fig. 2 zu ersehen, geht das Mittelstück 36 des Unterbodens 34 jeweils über Schrägen 38 und 40 in ein Gehäuse 42 und 44 über, die mit einer äußeren Umfangskante eines Ringflansches 32 am unteren Ende des Behälters 12 dichtend verbunden sind.

Die Gehäuse 42 und 44 umgrenzen Anströmkammern 46 und 48.

Das Innere des Behälters 12 stellt eine Prozeßkammer 50 dar, in der ein partikelförmiges Gut 51 mit Prozeßluft 52 behandelt werden soll. Schon an dieser Stelle sei das Grund- und Arbeitsprinzip der Vorrichtung 10 erläutert.

Durch die Ausgestaltung der übereinander angeordneten Leitplatten 16 bis 18 und 20 bis 22 tritt die Prozeßluft 52 aus dem Anströmkammern 46 und 48 jeweils in einer etwa horizontal gerichteten Strömung 54 bzw. 56 in die Prozeßkammer 50 ein.

Die Strömungen 54 und 56 sind entgegengesetzt und aufeinander zu gerichtet, wie das insbesondere aus der Draufsicht von Fig. 1 ersichtlich ist.

Diese beiden entgegengesetzt gerichteten etwa horizontalen Strömungen 54 und 56 treffen in einer sogenannten Aufbruchzone 58 aufeinander. Diese Aufbruchzone 58 liegt im Bereich eines Durchmessers des Bodens 14 etwa mittig zwischen den beiden Schlitzen 26 und 30. In dieser Aufbruchzone 58 treffen die gegenläufigen Strömungen 54 und 56 aufeinander und werden in eine vertikal nach oben gerichtete Strömung 64 umgelenkt.

Im Bereich der Aufbruchzone 58 sind zwei stehende, nach oben sprühende Düsen 60 und 62 angeordnet.

Um den Übergang von den im wesentlichen horizontal gerichteten Strömungen 54 und 56 zusätzlich zu leiten, ist im Bereich der Aufbruchzone 56 eine vertikal hochstehende Leitfläche 66 angeordnet, die über eine sanfte Rundung in das Mittelstück 36 übergeht. Insbesondere die aus den Schlitzen 26 und 30 austretenden Prozeßluftmengen treffen unmittelbar auf die Krümmung der Leitfläche 66 und werden dann sofort vertikal nach oben abgelenkt geführt.

Das in der Prozeßkammer 50 aufgenommene Gut 51 wird somit im Bereich der diametral gegenläufigen Strömungen 54 und 56 mit der Prozeßluft 52 zu einem schwebenden, sich etwa horizontal bewegenden Bett behandelt.

Insbesondere aus der Draufsicht von Fig. 1 ist ersichtlich, daß die Folge an Schlitzen 28, 29 und 30 aus immer breiteren Schlitzen besteht, über die dann dementsprechend mehr Prozeßluft eintreten kann, d.h. das Gut kann sich in diesem Strömungsbereich ausbreiten. Die einzelnen Partikel können sich voneinander weg bewegen und somit ohne Beeinträchtigungen der Gutpartikel untereinander mit der Prozeßluft optimal behandelt werden. Das Gut kann quasi ausatmen, bevor es dann in der Aufbruchzone vertikal nach oben bewegt wird. Bei dieser vertikal nach oben gerichteten Bewegung kann es über die Düsen 60 und 62, wenn es verlangt wird, mit einer Flüssigkeit besprüht werden, bspw. zum Granulieren oder zum Coaten. Die Prozeßluft 52 trennt sich nach einer gewissen Zeit von dem Gut 51, das aufgrund der Schwerkraft wieder auf den Boden 14 herabfällt. Die Prozeßluft 52 wird in an sich bekannter Weise vom Behälter 12 ggf. unter Zwischenschaltung von Filtern abgeführt und ggf. nach einer Aufarbeitung den Anströmkammern 46 und 48 wieder zugeführt.

Wie insbesondere aus den Darstellungen von Fig. 1, 4 und 5 zu erkennen, wird die vom Behälter 12 abgeführte Prozeßluft über ein zentrales Rohr 68 in Richtung Boden geführt, über einen Verteiler 70 mit einer Verteilerklappe 72 zwei getrennten Leitungen 74 und 76 zugeführt, die dann mit den entsprechenden Anströmkammern 46 bzw. 48 verbunden sind.

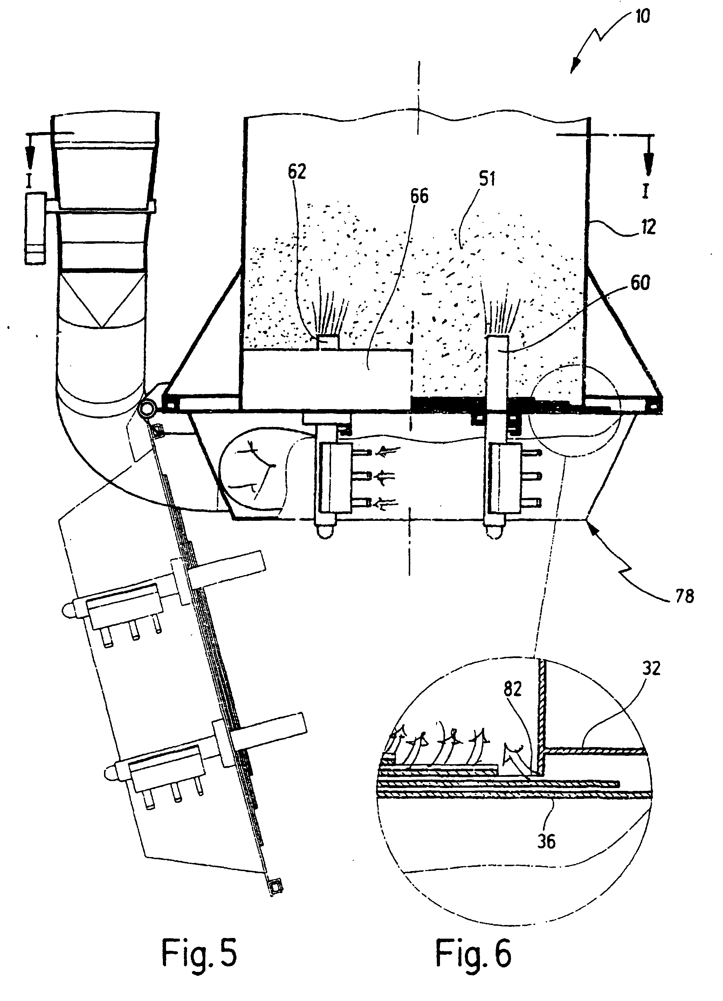

Aufgrund der zuvor beschriebenen Ausgestaltung des Unterbodens 34 besteht die Möglichkeit, die Düsen auf einem gemeinsamen Bausatz 78 aufzunehmen, der, wie in Fig. 5 dargestellt ist, von unten vom Boden wegschwenkbar ist, und zwar um die Schwenkachse 80. Aus der Darstellung von Fig. 2 und 3 bzw. 5 und 6 ist zu erkennen, daß sich die Leitplatten bis unter den umfänglichen Ringflansch 32 erstrecken, so daß dadurch jeweils halbkreisförmige Umfangsschlitze 82 und 84 gebildet werden.

Dadurch ist es nun möglich, auch die Prozeßluft 42 unmittelbar in dem Eckübergangsbereich zwischen Behälter 12 und Boden 14 mit der Prozeßluft zu beaufschlagen, und zwar entsprechend in Richtung der jeweiligen Strömung 54 bzw. 56 gerichtet.

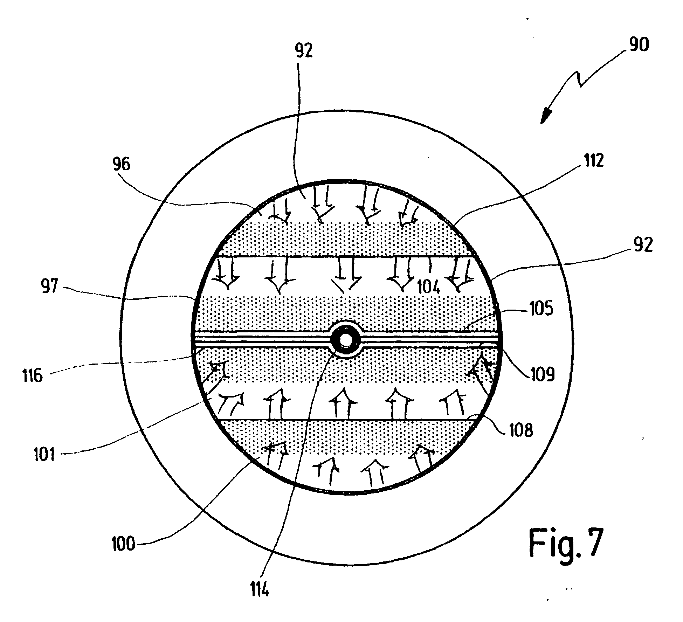

In Fig. 7 ist eine der Darstellung von Fig. 1 entsprechende Draufsicht einer Vorrichtung 90 ersichtlich, wobei die Prozeßluftzuführungsleitungen weggelassen sind.

Die Vorrichtung 90 weist ebenfalls einen stehend hohlzylindrischen Behälter 92 auf, der über einen Boden 94 verschlossen ist.

Der Boden 94 ist auf einer Seite bzw. einer Hälfte aus zwei Leitplatten 96 und 97 aufgebaut, wobei die Leitplatte 97 unter der Leitplatte 96 liegt und von dieser etwas überlappt wird. Dadurch ist zwischen diesen ein Schlitz 104 gebildet. Entsprechend diametral gegenüberliegend sind zwei Leitplatten 100 und 101 vorgesehen, zwischen denen dann ein Schlitz 109 gebildet ist. Unmittelbar an der Aufbruchzone 116 sind dann, wie zuvor beschrieben, noch zwei Schlitze 105 bzw. 106 vorgesehen.

Auch hier sind, wie durch die Strömungspfeile ersichtlich, Umfangsschlitze vorhanden, die hier nicht näher bezeichnet sind.

In dieser Baugröße ist es ausreichend, daß in der Aufbruchzone 116 nur eine einzige Düse 114 vorhanden ist.

Aus einem Vergleich zwischen der Draufsicht von Fig. 1 und Fig. 7 ist ersichtlich, daß der Abstand zwischen den Schlitzen 104 bzw. 105 oder 108 und 109 in der jeweiligen Strömungsrichtung gleich ist wie der Abstand der in Fig. 1 dargestellten Schlitze untereinander.

Demzufolge herrschen in der jeweiligen Strömungsrichtung gesehen entsprechend identische Strömungsverhältnisse.

Das bedeutet, geht man von der in Fig. 7 dargestellten Basisgröße aus, ist ein Scaling-up zu dem in Fig. 1 gezeigten Boden völlig problemlos möglich, indem eben im selben Abstand untereinander eine entsprechend höhere Anzahl an Schlitzen vorhanden ist. Entsprechend werden dann auch mehr Düsen in der Aufbruchzone angeordnet, in Fig. 7 reicht eine Düse aus, in Fig. 1 sind es zwei Düsen.

Ansonsten ist die konstruktive Ausgestaltung und Prozeßluftführung bei der Vorrichtung 90 von Fig. 7 identisch zu der in Zusammenhang mit Fig. 1 bis 6 beschriebenen Vorrichtung 10.

In Fig. 7 ist noch dargestellt, daß die Leitplatten, in ihrer jeweiligen Strömungsrichtung gesehen, in ihrer zweiten Hälfte mit Perforationen 112 versehen sind. Über die Perforationen 112 kann eine gewisse, wenn auch geringe Menge der Prozeßluft vertikal von unten nach oben gerichtet durch die Leitplatten hindurchtreten und somit dem über den Leitplatten bewegten Gut eine gewisse vertikale Bewegungskomponente auferlegen. Dies ist dann der Fall, wenn besonders grobes und schweres partikelförmiges Gut bewegt wird und die Gefahr besteht, daß dieses bspw. auf dem Laufweg zwischen dem Schlitz 108 und 109 aufgrund der Schwerkraft auf die Oberseite der Leitplatte 101 abzusinken droht.

Über die Perforationen 112 wird also in etwa in der zweiten Hälfte des Laufweges ein zusätzliches Luftpolster geschaffen, die das Gut in entsprechendem schwebendem Abstand über dem Boden hält.

## Patentansprüche

1. Vorrichtung zum Behandeln von partikelförmigem Gut (51), mit einer Prozeßkammer (50) zum Aufnehmen und zum Behandeln des Gutes (51), wobei ein Boden (14, 94) der Prozeßkammer (50) aus einander überlappenden, etwa ebenen Leitplatten (16-18, 20-22; 96, 97, 100, 101) aufgebaut ist, zwischen denen Schlitze (24-26, 28-30, 104, 105, 108, 109) gebildet sind, über die Prozeßluft (52) mit einer im wesentlichen horizontalen Bewegungskomponente in die Prozeßkammer (50) einführbar ist, wobei die Schlitze (24-26, 28-30, 104, 105, 108, 109) derart angeordnet sind, daß zwei entgegengesetzt, aufeinander zu gerichtete, im wesentlichen horizontal verlaufende Strömungen (54, 56) an eingeführter Prozeßluft (52) entstehen, die längs einer Aufbruchzone (58, 116) aufeinandertreffen und in eine im wesentlichen vertikal nach oben gerichtete Strömung (64) umgelenkt werden, **dadurch gekennzeichnet, daß** in der Aufbruchzone zumindest eine, etwa vertikal nach oben sprühende Düse (60, 62, 114) angeordnet ist, und daß der Boden (14, 94) kreisförmig ist und sich die Schlitze (24-26, 28-30, 104, 105, 108, 109) längs Sekanten erstrecken und die Aufbruchzone (58, 116) längs eines Durchmessers angeordnet ist, und daß die Leitplatten (16-18, 20-22; 96, 97, 100, 101) etwa in einer Ebene liegen.

2. Vorrichtung nach Anspruch 1, **dadurch gekennzeichnet, daß** im Bereich der Aufbruchzone (28) Leitflächen (66) angeordnet sind, die den Übergang von den horizontalen Strömungen (54, 56) in die vertikal nach oben gerichtete Strömung (64) leiten.

3. Vorrichtung nach Anspruch 1 oder 2, **dadurch gekennzeichnet, daß** im Bereich des Umfangs des Bodens (14, 94) ebenfalls Schlitze (82, 84) angeordnet sind, über die Prozeßluft (52) entsprechend den gegenläufigen Strömungen (54, 56) in die Prozeßkammer (50) einführbar ist.

4. Vorrichtung nach einem der Ansprüche 1 bis 3, **dadurch gekennzeichnet, daß** unter dem Boden (14) zwei Anströmkammern (46, 48) angeordnet sind, die mit Prozeßluft (52) beschickbar sind.

5. Vorrichtung nach Anspruch 4, **dadurch gekennzeichnet, daß** die beiden Anströmkammern (46, 48) sich zur Aufbruchzone (58) hin in vertikaler Richtung zu einem Schlitz (26, 30), der unmittelbar an der Aufbruchzone (58) mündet, verjüngen.

6. Vorrichtung nach Anspruch 5, **dadurch gekennzeichnet, daß** die zumindest eine Düse (60, 62, 114) zwischen den geteilten Anströmkammern (46, 48) und von diesen baulich getrennt angeordnet ist.

7. Vorrichtung nach Anspruch 6, **dadurch gekennzeichnet, daß** die zumindest eine Düse (60, 62, 114) nach unten vom Boden (14) abnehmbar ist.

8. Vorrichtung nach einem der Ansprüche 1 bis 7, **dadurch gekennzeichnet, daß** in Strömungsrichtung jedes der aus den Schlitzen (104, 105, 108, 109) austretenden gegenläufigen Teilstromes gesehen, in den Leitplatten (96, 97, 100, 101) etwa in deren zweiten Hälfte, vor dem nachfolgenden Schlitz, Perforationen (112) vorgesehen sind.

9. Vorrichtung nach einem der Ansprüche 1 bis 8, **dadurch gekennzeichnet, daß** die Abstände zwischen den Schlitzen, in Strömungsrichtung gesehen, etwa gleich sind.

## Claims

1. Device for treating particulate product (51) having a process chamber (50) for receiving and treating the product (51), a bottom (14, 94) of the process chamber (50) being constructed from substantially plane baffle plates (16-18, 20-22; 96, 97, 100, 101) that overlap each other, with slots (24-26, 28-30, 104, 105, 108, 109) formed between the latter through which the process air (52) can be introduced into the process chamber (50) with a substantially horizontal component of motion, wherein the slots (24-26, 28-30, 104, 105, 108, 109) are arranged in such a way that two opposite flows (54, 56) of incoming process air (52) are created, which are directed one toward the other and along a substantially horizontal path, which flows (54, 56) meet along a breaking-up zone (58, 116) and are then deflected to form an upwardly directed, substantially vertical flow (64), **characterized in that** at least one nozzle (60, 62, 114) spraying in an about vertical upward direction is arranged in the breaking-up zone, and **in that** the bottom (14, 94) is circular and the slots (24-26, 28-30, 104, 105, 108, 109) extend along secants and the breaking-up zone (58, 116) extends along a diameter, and wherein the baffle plates (16-18, 20-22; 96, 97, 100, 101) are substantially arranged in a plane.

2. Device of claim 1, **characterized in that** guide surfaces (66) are arranged in the area of the breaking-up zone (28) which define the transition from the horizontal flows (54, 56) to the vertically upward flow (64).

3. Device of claims 1 or 2, **characterized in that** slots (82, 84) are arranged in the area of the circumference of the bottom (14, 94) also, through which process air (52) can be introduced into the process chamber (50) in line with the oppositely directed flows (54, 56).

4. Device of anyone of claims 1 through 3, **characterized in that** two inflow chambers (46, 48) are arranged beneath the bottom (14), to which chambers process air (52) can be supplied.

5. Device of claim 4, **characterized in that** the two inflow chambers (46, 48) taper toward the breaking-up zone (58) in vertical direction to form a slot (26, 30) that opens directly adjacent the breaking-up zone (58).

6. Device of claim 5, **characterized in that** the at least one nozzle (60, 62, 114) is arranged between the divided inflow chambers (46, 48), but structurally separate from them.

7. Device of claim 6, **characterized in that** the at least one nozzle (60, 62, 114) can be removed from the bottom (14) in a downward direction.

8. Device of anyone of claims 1 through 7, **characterized in that** perforations (112) are provided in the baffle plates (96, 97, 100, 101) approximately in their second half before the next slot, viewed in the flow direction of each oppositely directed partial flow exiting the slots (104, 105, 108, 109).

9. Device of anyone of claims 1 through 8, **characterized in that** the spacings between the slots, viewed in the direction of flow, are substantially equal.

## Revendications

1. Dispositif pour le traitement d'un matériau sous forme de particules (51), avec une chambre de traitement (50) pour recevoir et traiter le matériau (51), un fond (14, 94) de la chambre de traitement (50) étant constitué de plaques de guidage (16-18, 20-22; 96, 97, 100, 101) à peu près planes se chevauchant, entre lesquelles sont formées des fentes (24-26, 28-30, 104, 105, 108, 109) par l'intermédiaire desquelles l'air de traitement (52) peut être introduit dans la chambre de traitement (50) avec une composante de mouvement sensiblement horizontale, les fentes (24-26, 28-30, 104, 105, 108, 109) étant disposées de telle manière que deux flux (54, 56) s'écoulant sensiblement horizontalement, dirigés dans le sens opposé l'un à l'autre, qui se rencontrent le long d'une zone de rupture (58, 116) et qui sont déviés dans un flux (64) dirigé sensiblement verticalement vers le haut, sont générés dans l'air de traitement (52), **caractérisé en ce qu'**au moins une buse (60, 62, 114) à pulvérisation à peu près verticale vers le haut est disposée dans la zone de rupture et **en ce que** le fond (14, 94) est circulaire et **en ce que** les fentes (24-26, 28-30, 104, 105, 108, 109) s'étendent le long de sécantes et la zone de rupture (58, 116) est disposée le long d'un diamètre et **en ce que** les plaques de guidage (16-18. 20-22; 96, 97, 100, 101) sont disposées à peu près dans un plan.

2. Dispositif selon la revendication 1, **caractérisé en ce que** des surfaces de guidage (66), qui guident le passage des flux horizontaux (54, 56) dans le flux dirigé verticalement vers le haut (64), sont disposées au niveau de la zone de rupture (28).

3. Dispositif selon la revendication 1 ou 2, **caractérisé en ce que** des fentes (82, 84), par l'intermédiaire desquelles l'air de traitement (52) peut être introduit dans la chambre de traitement (50) en correspondance avec les flux de sens contraires (54, 56), sont également disposées dans la zone de pourtour du fond (14, 94).

4. Dispositif selon l'une des revendications 1 à 3, **caractérisé en ce que** deux chambres de soufflage (46, 48), qui peuvent être alimentées avec de l'air de traitement (52), sont disposées sous le fond (14).

5. Dispositif selon la revendication 4, **caractérisé en ce que** les deux chambres de soufflage (46, 48) se rétrécissent, vers la zone de rupture (58) et dans la direction verticale, en une fente (26, 30), qui débouche directement dans la zone de rupture (58).

6. Dispositif selon la revendication 5, **caractérisé en ce que** la au moins une buse (60, 62, 114) est disposée entre les chambres de soufflage divisées (46, 48). et séparée de celles-ci par construction.

7. Dispositif selon la revendication 6, **caractérisé en ce que** la au moins une buse (60, 62, 114) peut être enlevée du fond (14) par dessous.

8. Dispositif selon l'une des revendications 1 à 7, **caractérisé en ce que** des perforations (112) sont prévues dans les plaques de guidage (96, 97, 100, 101), à peu près dans leur seconde moitié, avant la fente suivante, vues dans le sens d'écoulement de chacun des flux partiels opposés sortant des fentes (104, 105, 108, 109).

9. Dispositif selon l'une des revendications 1 à 8, **caractérisé en ce que** les intervalles entre les fentes, vus dans le sens d'écoulement, sont à peu près identiques.
